# EUROPEAN PATENT SPECIFICATION

(11) **EP 1 536 142 B1**
(45) Date of publication and mention of the grant of the patent: **23.05.2007**
(21) Application number: 04257367.5
(22) Date of filing: 26.11.2004
(51) Int. Cl.: F04D 25/06

(54) **Motor-blower unit**
Motor-Gebläse Einheit
Groupe moto-ventilateur

(30) Priority: 28.11.2003 JP 2003398527
(43) Date of publication of application: 01.06.2005
(73) Proprietor: JAPAN SERVO CO. LTD., Chiyoda-ku Tokyo (JP)
(72) Inventor: Ohiwa, Shoji, c/o JAPAN SERVO Co., Ltd., Kiryu-shi Gunma-ken (JP); Yamazaki, Susumu c/oYamazaki Technical Cons.Office, Tsuchiura-shi Ibaraki-ken (JP); Higo, Asahi, c/o JAPAN SERVO Co., Ltd., Kiryu-shi Gunma-ken (JP)
(74) Representative: Naylor, Matthew John

(56) References cited:
- DE-U1- 29 501 695
- US-A- 4 909 711
- US-A- 5 695 318
- US-B1- 6 386 839

## Description

### BACKGROUND OF THE INVENTION

### 1. Field of the Invention

This invention relates to blowers.

### 2. Description of the Prior Art

Disclosed in the prior art is a blower motor wherein the front end of the boss of the rotor is in the shape of a cone so that air can smoothly be sucked into the impeller. Thus, the blower motor improves the blast performance of blowers and lowers the blast noise levels of blowers.

When the blower motor with the front end of the boss of the rotor in the shape of a cone is mounted to a blower, however, its impeller has to be elongated in the axial direction to achieve an improved blast performance of the blower f itted with the blower motor. Thus, the blower becomes bulky.

US-B-6386839 discloses a radiator fan including axial and a coil is provided centrifugal fans. Outside the periphery of the around a motor shell.

### SUMMARY OF THE INVENTION

An object of the present invention is to provide a blower motor capable of reducing the noise level of blower and improving the blast performance of the blower without making the blower bulky.

According to the present invention, there is provided a blower according to claim 1.

In the blower motor, because the rotor tapers off toward the air inlet, air flows along the side surface of the cone-shaped rotor; accordingly, the noise level of the blower is low. Besides, the blower is given high blast performance without making the blower bulky.

### BRIEF DESCRIPTION OF THE DRAWINGS

Fig. 1 shows a blower of the present invention;
Fig. 2 is a section taken along the line A-A of Fig. 1;
Fig. 3 is an illustration of the workings of the blower of Figs. 1 and 2;
Fig. 4 is a sectional view of another blower of the present invention;
Fig. 5 is a sectional view yet another blower of the present invention; and
Fig. 6 is a sectional view of a further blower of the present invention.

### DETAILED DESCRIPTION OF THE INVENTION

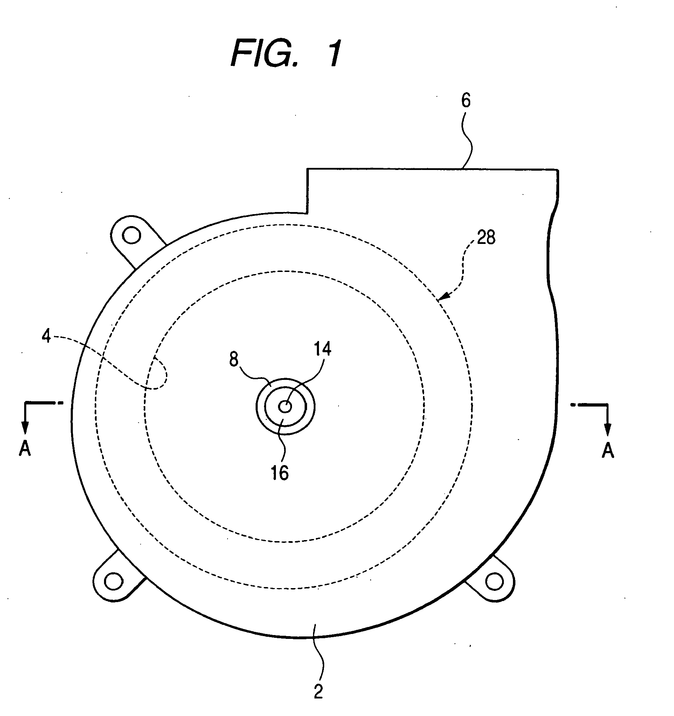

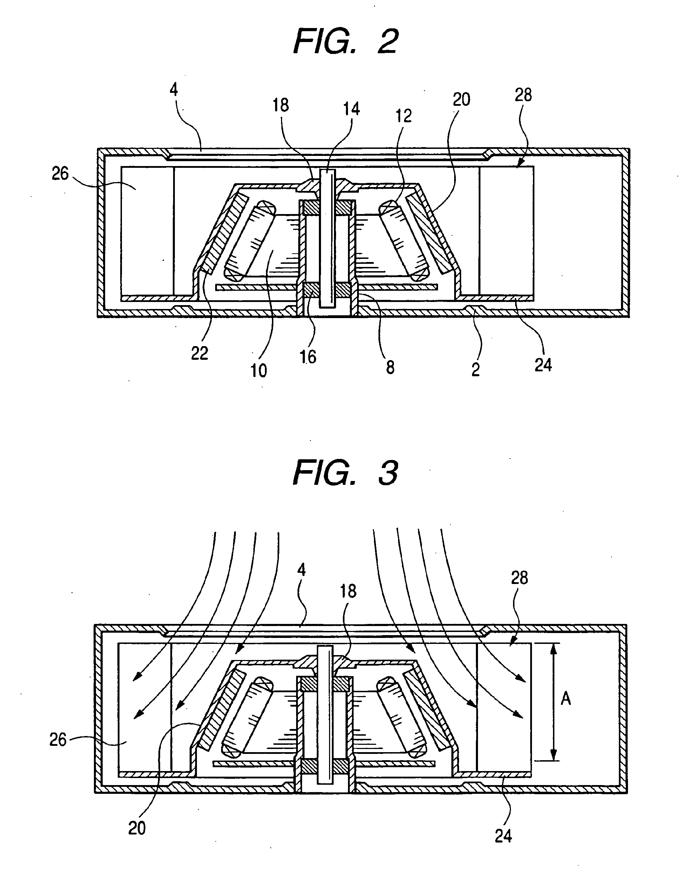

By referring to Figs. 1 and 2, a blower of the present invention will be described below. An air inlet 4 is provided on one sidewall of a casing 2, an outlet 6 is provided on an outer circumferential surface of the casing 2. A cylindrical housing 8 is fixed to the casing 2. A motor shaft 14 is supported in an oil-retaining plain bearing 16, which is supported in the housing 8. A boss 18 is fixed to the motor shaft 14. A rotor 20 is secured to the boss 18. A ring-like magnet 22 is fixed to an inner circumferential surface of the rotor 20. The magnet 22 is multi-polarized circumferentially. An outer circumferential surface of the rotor 20 tapers off toward the air inlet 4, or a portion of the motor shaft 14 fixing the boss 18 of the rotor 20. The ratio of the minimum outside diameter to the maximum outside diameter of the rotor 20 is 0.7 to 0.9. An inner circumferential surface of the magnet 22 tapers off toward the air inlet 4. A stator 10 is fixed to the housing 8. The stator 10 is provided with motor windings 12. Namely, the motor windings 12 are housed in the slots of the stator 10. An outer circumferential surface of the stator 10 tapers off toward the air inlet 4. The gap between the stator 10 and the magnet 22 is uniform in size. The stator 10, rotor 20, etc. constitute a brushless blower motor of an outer-rotor type. The rotor 20 and a support 24 for an impeller 28 are made as a single piece. A plurality of blades 26, for example 80 blades, are supported on the support 24 to constitute the impeller 28.

When a power supply connected to the motor windings 12 is switched on, the rotor 20 of the blower motor and the impeller 28 of the blower rotate. As shown in Fig. 3, the centrifugal force caused by the rotation of the impeller 28 causes an air flow fromthe air inlet 4 to the outer circumference of the impeller 28 and high-pressure air is discharged through the outlet 6.

In the blower having the blower motor shown in Figs. 1 and 2, because the outer circumferential surface of the rotor 20 tapers off toward the inlet 4, an extreme outside diameter of the rotor 20 is small, the effective area of the air inlet 4 is large. Besides, air flows along the side surface of the cone-shaped rotor 20; accordingly, the direction of the air flow changes smoothly and air flows up to the vicinity of the support 24. Thus, the noise level of the blower is low. Furthermore, the ratio of the effective length "A" of blades 26 to their overall length is as large as 90%; therefore, the capacity of the blower is large for the axial length of the impeller 28 and the thickness of the blower. Thus, the blower is given high blast performance without extending the axial length of the impeller of the blower or making the blower bulky. Therefore, the blast performance of the blower can be improved without making the blower bulky. In addition, because attraction is generated between the stator 10 and the magnet 22, the axial positional slippage of the magnet 22 because of conditions on the installation of the blower, or undesirable installed position, or posture, of the blower, and axial thrust due to the rotation of the impeller 28 can be prevented if an inexpensive oil-retaining plain bearing 16 is used to support the motor shaft 14. Accordingly, there occurs no positional slippage between the center of the stator 10 and that of the magnet 22, reducing the axial vibration in the direction of the motor shaft 14 and the noise level of the blower and achieving a low noise level in a high static-pressure range.

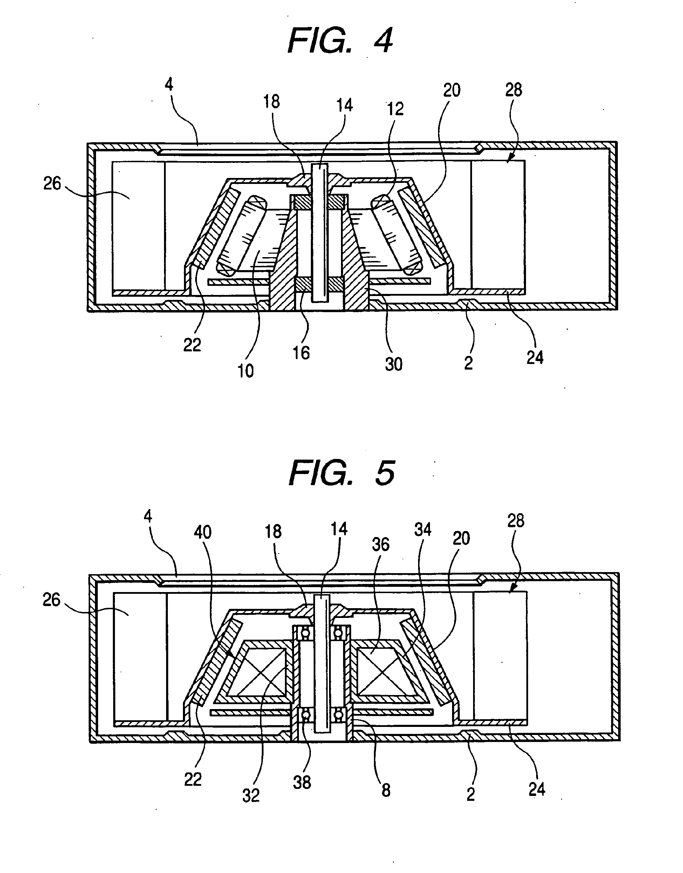

Fig. 4 shows another blower according to the present invention. A housing 30 is fixed to a casing 2, and a stator 10 is fixed to the housing 30. A motor shaft 14 is supported in an oil-retaining plain bearing 16, which is supported in the housing 30. An outer circumferential surface of the housing 30 tapers off toward an air inlet 4.

The blower motor of Fig. 4, too, has a low noise level of the blower and high blast performance for its dimensions, and there occurs no positional slippage between the center of the stator 10 and that of a magnet 22. Besides, the diameter of part of the housing 30 supported by the casing 2 is large; accordingly, a rotor 20 is supported rigidly and the vibration of an impeller 28 is light. The effect of reducing noise levels is large, particularly when a large blower is fitted with the blower motor.

The stator 10 shown in Figs. 2, 3, and 4 has a plurality of main magnetic poles and each of the main magnetic poles has a motor winding 12. If the stator yoke of the stator 10 is divided for each main magnetic pole, each divided stator yoke is provided with a motor winding, and the divided stator yokes with motor winding are connected, a blower motor can easily be made.

Fig. 5 shows yet another blower according to the present invention. Amotor shaft 14 is supported in a rolling bearing 38, which is supported in a housing 8. A center yoke 32 and two divided stator yokes 34 are fixed to the housing 8. The two divided stator yokes 34 constitute a stator 40. An outer circumferential surface of the stator 40 tapers off toward an air inlet 4. The two divided stator yokes 34 are divided for each main magnetic pole. Each of the two divided stator yokes 34 has a main magnetic pole extending radially from the center toward outside. The main magnetic poles of the two divided stator yokes 34 are offset from each other by 180 electrical degrees. The center yoke 32 establishes a short circuit between the center portions of the two divided stator yokes 34 magnetically. A motor winding 36 is supported by each of the two divided stator yokes 34, and the center yoke 32 is placed in the center of the motor winding 36. The motor winding 36 is wound around a bobbin. The motor winding 36 is of ring-like shape and an outer circumferential surface of the motor winding 36 tapers off toward the air inlet 4.

The blower motor of Fig. 5, too, has a low noise level and high blast performance for its dimensions. In addition, because axial attraction is generated between the stator 40 and a magnet 22, there occurs no positional slippage between the center of the stator 40 and that of the magnet 22.

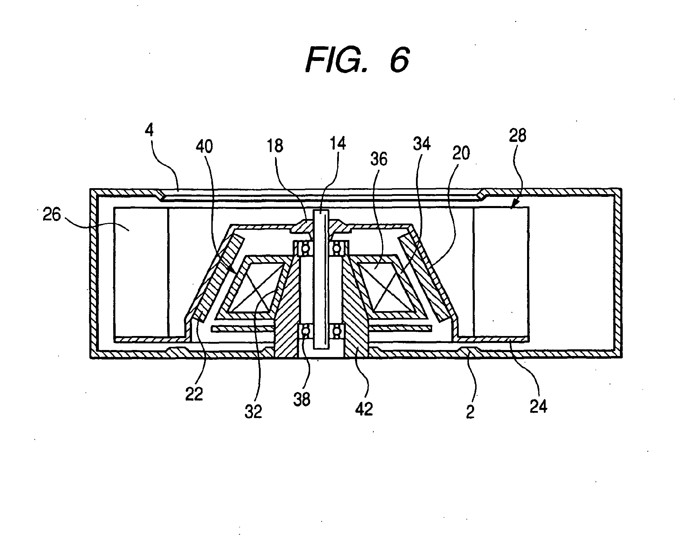

Fig. 6 shows yet another blower according to the present invention. A housing 42 is fixed to a casing 2, and a stator 40 is fixed to the housing 42. A motor shaft 14 is supported in a rolling bearing 38, which is supported in the housing 42. An outer circumferential surface of the housing 42 tapers off toward an air inlet 4.

The blower motor of Fig. 6, too, has a low noise level and high blast performance for its dimensions. In addition, there occurs no positional slippage between the center of the stator 40 and that of a magnet 22. Besides, the diameter of part of the housing 42 supported by the casing 2 is large; accordingly, a rotor 20 is supported rigidly and the vibration of an impeller 28 is light.

In the above embodiments, the housings 8, 30, and 42 are fixed to their respective casings 2. However, the casing and the housing may be made as a single piece.

## Claims

1. A blower having:
a casing (2) having an air inlet (4) formed on one sidewall thereof and an air outlet (6);
an impeller (28) having a plurality of blades (26), said impeller being mounted for rotation within said casing; and
a blower motor comprising:
a housing (8) supported by said casing;
a motor shaft (14) supported in a bearing (16,38) which is supported in said housing;
a rotor (20) which is fixed to said motor shaft and tapers off toward said air inlet;
a stator (10,40) which is fixed to said housing and tapers off toward said air inlet; and
a magnet (22);
**characterised in that:**
said magnet is fixed to an inner circumferential surface of said rotor, said rotor being outward of said stator.

2. The blower according to claim 1, wherein said magnet tapers off toward said air inlet.

3. The blower according to claim 1 or 2, wherein said housing tapers off toward said air inlet.

4. The blower according to any one of the previous claims, wherein a ratio of the minimum outside diameter to the maximum outside diameter of said rotor is 0.7 to 0.9.

5. The blower according to any of the previous claims, wherein said stator (40) has divided stator yokes (34) divided for each main magnetic pole and each of said divided stator yokes is provided with a motor winding (36).

6. The blower according to any one of claims 1 to 4 ; wherein each of two divided stator yokes (34) has a main magnetic pole extending radially from a center toward outside, the main magnetic poles of said two divided stator yokes are offset from each other by 180 electrical degrees, there is a center yoke (32) provided to magnetically establish a short circuit between the center portions of said two divided stator yokes, a motor winding (36) is supported between said two divided stator yokes, said center yoke is placed at a center of said motor winding, and said motor winding is of ring-like shape and tapers off toward said air inlet.

## Patentansprüche

1. Motorgebläse, umfassend:
ein Gehäuse (2) mit einer Lufteinlassöffnung (4), die auf einer Seitenwand desselben ausgebildet ist, und einer Luftauslassöffnung (6);
ein Flügelrad (28) mit einer Vielzahl an Schaufeln (26), welches Flügelrad zur Drehung im Inneren des Gehäuses angebracht ist und
einen Motorgebläsemotor, umfassend:
eine Ummantelung (8), welche durch das Gehäuse getragen ist;
eine Motorwelle (14), welche in einem Lagerkörper (16, 38) gelagert ist, welcher wiederum in der Ummantelung gehalten ist,
einen Rotor (20), der an der Motorwelle befestigt ist und sich zur Lufteinlassöffnung hin verjüngt,
einen Stator (10, 40), der in dem Gehäuse angebracht ist und sich zur Lufteinlassöffnung hin verjüngt, und
einen Magnet (22),
**dadurch gekennzeichnet, dass**:
der Magnet an einer Innenumfangsoberfläche des Rotors befestigt ist, welcher Rotor außerhalb des Stators ist.

2. Motorgebläse nach Anspruch 1, worin sich der Magnet zur Lufteinlassöffnung hin verjüngt.

3. Motorgebläse nach Anspruch 1 oder 2, worin die Ummantelung sich zur Lufteinlassöffnung hin verjüngt.

4. Motorgebläse nach einem der vorangegangenen Ansprüche, worin das Verhältnis des Minimalaußendurchmessers zum Maximalaußendurchmesser des Rotors 0,7 bis 0,9 beträgt.

5. Motorgebläse nach einem der vorangegangenen Ansprüche, worin der Stator (40) unterteilte Statorjoche (34) aufweist, die für jeden der Hauptmagnetpole unterteilt sind, und jedes der unterteilten Statorjoche mit einer Motorwicklung (36) bereitgestellt ist.

6. Motorgebläse nach einem der Ansprüche 1 bis 4, worin jedes der zwei unterteilten Statorjoche (34) einen Hauptmagnetpol hat, der sich radial von der Mitte nach außen hin erstreckt, wobei die Hauptmagnetpole der beiden unterteilten Statorjoche voneinander um 180 elektrische Grad versetzt sind, wobei ein Mitteljoch (32) zur magnetischen Erzeugung eines Kurzschlusses zwischen den Mittelabschnitten der beiden unterteilten Statorjoche bereitgestellt ist, wobei eine Motorwicklung (36) zwischen den beiden unterteilten Statorjochen getragen ist, wobei das Mitteljoch an der Mitte der Motorwicklung positioniert ist, und wobei die Motorwicklung ringförmig ist und sich zur Lufteinlassöffnung hin verjüngt.

## Revendications

1. Ventilateur comprenant :
un carter (2) ayant une entrée d'air (4) formée sur sa paroi latérale et une sortie d'air (6) ;
une roue (28) ayant une pluralité d'aubes (26), ladite roue étant montée pour la rotation à l'intérieur dudit carter ; et
un moteur de ventilateur comprenant :
un boîtier (8) supporté par ledit carter ;
un arbre de moteur (14) supporté dans un palier (16, 38) qui est supporté dans ledit boîtier ;
un rotor (20) qui est fixé sur ledit arbre de moteur et se rétrécit progressivement vers ladite entrée d'air ;
un stator (10, 40) qui est fixé sur ledit boîtier et se rétrécit progressivement vers ladite entrée d'air ; et un aimant (22) ;
**caractérisé en ce que** :
ledit aimant est fixé sur une surface circonférentielle interne dudit rotor, ledit rotor étant orienté vers l'extérieur dudit stator.

2. Ventilateur selon la revendication 1, dans lequel ledit aimant se rétrécit progressivement vers ladite entrée d'air.

3. Ventilateur selon la revendication 1 ou 2, dans lequel ledit boîtier se rétrécit progressivement dans ladite entrée d'air.

4. Ventilateur selon l'une quelconque des revendications précédentes, dans lequel un rapport du diamètre externe minimum sur le diamètre externe maximum dudit rotor est de 0,7 à 0,9.

5. Ventilateur selon l'une quelconque des revendications précédentes, dans lequel ledit stator (40) a des culasses de stator (34) divisées pour chaque pôle magnétique principal et chacune desdites culasses de stator divisées est prévue avec un enroulement de moteur (36).

6. Ventilateur selon l'une quelconque des revendications 1 à 4, dans lequel chacune des deux culasses de stator divisées (34) a un pôle magnétique principal s'étendant radialement à partir d'un centre vers l'extérieur, les pôles magnétiques principaux desdites deux culasses de stator divisées sont décalées l'une par rapport à l'autre de 180 degrés électriques, on propose une culasse centrale (32) pour établir magnétiquement un court-circuit entre les parties centrales desdites deux culasses de stator divisées, un enroulement de moteur (36) est supporté entre lesdites deux culasses de stator divisées, ladite culasse centrale est placée au centre dudit enroulement de moteur, et ledit enroulement de moteur a une forme annulaire et se rétrécit progressivement vers ladite entrée d'air.
